# EUROPEAN PATENT APPLICATION

(11) **EP 4 718 150 A1**
(43) Date of publication of application: **01.04.2026**
(21) Application number: 24858428.6
(22) Date of filing: 22.08.2024
(51) Int. Cl.: G02C 7/06

(54) **MYOPIA PREVENTION AND CONTROL LENS AND GLASSES FOR PREVENTING AND CONTROLLING MYOPIA**

(30) Priority: 25.08.2023 CN 202311083397
(71) Applicant: Peking University People's Hospital, Beijing 100044 (CN)
(72) Inventor: WANG, Kai, Beijing 100044 (CN)
(74) Representative: Becker Kurig & Partner Patentanwälte mbB
(86) International application number: PCT/CN2024/113908
(87) International publication number: WO 2025/044885

(57) **Abstract**

The present invention relates to the technical field of myopia control, in particular to a myopia control lens and eyeglasses for myopia control. The myopia control lens comprises: a lens substrate, on which a central optical zone and a control zone surrounding the periphery of the central optical zone are arranged; a plurality of optical microstructural units are arranged on the control zone, and the optical microstructural units are arranged in an aperiodic manner in the control zone; the optical microstructural units are used to change the incident angle of light.

## Description

This application claims priority to Chinese Patent Application No. 202311083397.0, filed with the China National Intellectual Property Administration on August 25, 2023, entitled "Myopia Control Lens and Spectacles for Myopia Control", the entire contents of which are incorporated herein by reference.

### Technical Field

The present invention relates to the field of myopia control technology, and in particular, to a myopia control lens and spectacles for myopia control.

### Background

In recent years, with the rapid development of electronic information technology, the load of near work has increased accordingly, leading to a higher incidence of myopia, especially among adolescents and children. As of 2020, the overall myopia rate among adolescents in China was 52.7%, with 14.3% for 6-year-old children, 35.6% for primary school students, 71.1% for junior high school students, and 80.5% for senior high school students. How to control myopia is attracting increasing attention.

Currently, one widely recognized theory for myopia control is the optical defocus theory. This theory posits that if an image is focused in front of the retina (i.e., positive defocus), axial elongation of the eye is inhibited, thereby controlling myopia; conversely, focusing an image behind the retina (negative defocus) has the opposite effect. Mainstream optical methods for myopia control currently include defocus spectacle lenses (hereinafter referred to as defocus lenses), orthokeratology lenses (Ortho-K, hereinafter referred to as OK lenses), and defocus soft contact lenses (hereinafter referred to as defocus soft lenses). Within the existing theoretical framework, all three are considered to work by creating peripheral myopic defocus to slow the progression of myopia.

However, clinical practice has revealed that the efficacy of existing optical control methods, such as defocus spectacle lenses, OK lenses, and defocus soft lenses, tends to decline over time. To maintain control efficacy, it is necessary to switch control methods, but even then, the efficacy after switching can only be maintained for a limited period. Therefore, how to delay the decline in optical control efficacy during myopia management has become an issue of growing concern for those skilled in the art.

### Summary of the Invention

To solve or partially solve the problems existing in the related art, the present invention provides a myopia control lens and eyeglasses for myopia control.

The present invention provides a myopia control lens, comprising: a lens substrate, on which a central optical zone and a control zone surrounding the periphery of the central optical zone are arranged;
a plurality of optical microstructural units are arranged on the control zone, and the optical microstructural units are arranged in an aperiodic manner in the control zone; the optical microstructural units are used to change the incident angle of light.

Further, the control zone is formed by tessellation of one, two, or more types of graphic units; among all the graphic units forming the control zone, some graphic units form the optical microstructural units; the remaining graphic units form substrate transparent units.

Further, the control zone is formed by aperiodic tessellation of one, two, or more types of graphic units.

Further, the control zone is formed by aperiodic tessellation of one type of graphic unit.

Further, the control zone is formed by aperiodic tessellation of two types of graphic units.

Further, the control zone is formed by periodic tessellation of one, two, or more types of graphic units.

Further, the control zone is formed by periodic tessellation of one type of graphic unit, and the shape of the graphic unit is a triangle, convex quadrilateral, perfect pentagon, or regular hexagon.

Further, among the plurality of optical microstructural units, some or all of the optical microstructural units have differences in shape and/or size.

Further, the optical microstructural units are one or a combination of microlenses, microconcave lenses, microcylinders, microprisms, or free-form surface lenses.

The present invention also provides eyeglasses for myopia control, which are provided with the myopia control lens according to any one of the above.

The myopia control lens provided by the present invention can include the following beneficial effects:
The myopia control lens provided by the present invention is designed with a control zone around the periphery of the central optical zone. The control zone is provided with a plurality of optical microstructural units capable of changing the incident angle of light, and the above-mentioned optical microstructural units are designed in an aperiodic arrangement. As a result, the position and angle of light entering the eyeball after being refracted by the control zone are also irregular. The control zone of this design can form strong optical interference in the peripheral visual field, so that when the eyeball rotates in different directions, the point spread function formed by an ideal point light source on the human retina is anisotropic and different, making it impossible for the retina to distinguish the correct growth direction of the eyeball in a short time, thereby minimizing the neural adaptation phenomenon of the retina and reducing the decline in optical control efficiency during myopia control. The myopia control lens emphasizes the aperiodicity of the positional distribution of the optical microstructural units, aiming to realize the irregularity of light in the peripheral visual field, thereby reducing the neural adaptation phenomenon of the retina and delaying the decline in optical control efficiency. Further, by arranging the optical microstructural units and the substrate transparent units in the control zone in a tessellated form, the filling rate can be improved, and the length of the optical interface between different optical structures can be increased to maximize the strong interference of light propagation.

It should be understood that the above general description and the following detailed description are only exemplary and explanatory, and cannot limit the present invention.

### Brief Description of Figures

By describing the exemplary embodiments of the present invention in more detail with reference to the accompanying drawings, the above and other objects, features, and advantages of the present invention will become more apparent. In the exemplary embodiments of the present invention, the same reference numerals usually represent the same components.
Fig. 1 is a schematic structural diagram of a myopia control lens according to an embodiment of the present invention;
Fig. 2 is a schematic diagram showing the state of light entering the eyeball after being refracted by the control zone of the myopia control lens provided by an embodiment of the present application;
Fig. 3 is a schematic structural diagram of graphic units in the control zone of a myopia control lens according to another preferred embodiment of the present invention;
Fig. 4 is a variant structure of the graphic unit shown in Fig. 3;
Fig. 5 is another variant structure of the graphic unit shown in Fig. 3;
Fig. 6 is a partial schematic diagram of the tessellated structure of the control zone in another preferred embodiment of the present invention;
Fig. 7 is a schematic structural diagram of a myopia control lens according to another preferred embodiment of the present invention;
Fig. 8 is a schematic structural diagram of a myopia control lens according to another preferred embodiment of the present invention;
Fig. 9 is a schematic structural diagram of graphic units in the control zone of the myopia control lens shown in Fig. 8 of the present invention;
Fig. 10 is a Penrose tessellation structure formed by the graphic units shown in Fig. 9;
Fig. 11 is a schematic diagram of tessellation of 15 types of perfect pentagons;
Fig. 12 is a schematic structural diagram of a myopia control lens in Embodiment 3 of the present invention;
Fig. 13 is a schematic structural diagram of graphic units in the control zone of the myopia control lens shown in Fig. 12 of the present invention.

### Detailed Description

The technical solutions in the embodiments of the present invention will be clearly and completely described below in conjunction with the accompanying drawings in the embodiments of the present invention. Obviously, the described embodiments are only a part of the embodiments of the present invention, not all of them. Based on the embodiments of the present invention, all other embodiments obtained by those of ordinary skill in the art without making creative labor belong to the protection scope of the present invention.

The terms used in the present invention are only for the purpose of describing specific embodiments and are not intended to limit the present invention. The singular forms "a", "said", and "the" used in the present invention and the appended claims are also intended to include the plural forms unless the context clearly indicates otherwise. It should also be understood that the term "and/or" as used herein refers to and includes any or all possible combinations of one or more of the associated listed items.

It should be understood that although terms such as "first", "second", and "third" may be used in the present invention to describe various information, such information should not be limited to these terms. These terms are only used to distinguish the same type of information from each other. For example, without departing from the scope of the present invention, the first information may also be called the second information, and similarly, the second information may also be called the first information. Thus, the features defined with "first" and "second" may explicitly or implicitly include one or more of these features. In the description of the present invention, the meaning of "plurality" is two or more, unless otherwise clearly and specifically limited.

The traditional myopia control theory holds that when wearing traditional single-vision glasses, the negative lens refractive power around the lens is greater, leading to the posterior shift of the focal point, i.e., negative defocus, which stimulates the progression of myopia. The defocus-type spectacle lenses developed on this basis are designed with a defocus zone around the central optical zone. The defocus zone is made of microlenses through a certain form of geometric distribution. The main function of the defocus zone is to converge external light to the front of the retina through the microlenses according to the defocus principle, forming a so-called "positive defocus" image, thereby achieving the purpose of delaying axial length growth and myopia progression.

However, the inventors of the present application found in clinical practice that:
1) The myopia control principle of defocus-type spectacle lenses seems to be inconsistent with that of OK lenses for the following reasons: most patients with poor control effect of defocus spectacle lenses have improved control effect after switching to OK lenses; while some patients with poor effect of OK lenses have achieved good control efficiency after switching to defocus spectacle lenses. It is thus speculated that the principle of such microstructures in controlling myopia should be different from that of OK lenses.
2)Not only microlenses but also microconcave lenses have similar myopia control effects to microlenses under the same geometric arrangement. The reason why existing microlens lenses (i.e., defocus lenses) are effective is not that they converge light in front of the retina, but that the provided multiple optical microlenses interfere with the propagation direction of the original negative defocus light. This is contrary to the traditional defocus theory.
3)The main reason for the decline in optical control efficiency during myopia control is the neural adaptation phenomenon of the retina. Further, the reason why existing lenses are prone to cause neural adaptation of the retina is that the lenses used, whether microstructures or microlenses, have artificial deliberate traces in their distribution at the peripheral part of the lens, i.e., there is a certain degree of consistency in geometric shape, or consistency in spatial distribution, or some obvious spatial distribution rules. In addition, the microstructures of existing lenses or the microshapes of microlenses are mostly simple structures such as circles or ellipses; the above reasons result in small disturbances to vision caused by light passing through the lenses, which can easily form neural adaptation of the retina, leading to a decline in control efficiency.

Based on the above research findings, the inventors of the present application overcame the technical prejudices existing in the prior art and considered improving the existing defocus lenses. The focus was shifted from how to converge all peripheral light passing through the lens to the front of the retina (or concentrate on certain areas in front of the retina) to how to disrupt the direction of peripheral light passing through the lens as much as possible (without paying attention to whether the light convergence point is in front of or behind the retina), that is, to enhance the interference effect on light propagation. As a result, when the eyeball rotates in different directions, the point spread function formed by an ideal point light source on the human retina is anisotropic and different, thereby minimizing the neural adaptation phenomenon of the retina, and expecting the myopia control effect of the spectacle lenses to be maintained for a longer period of time.

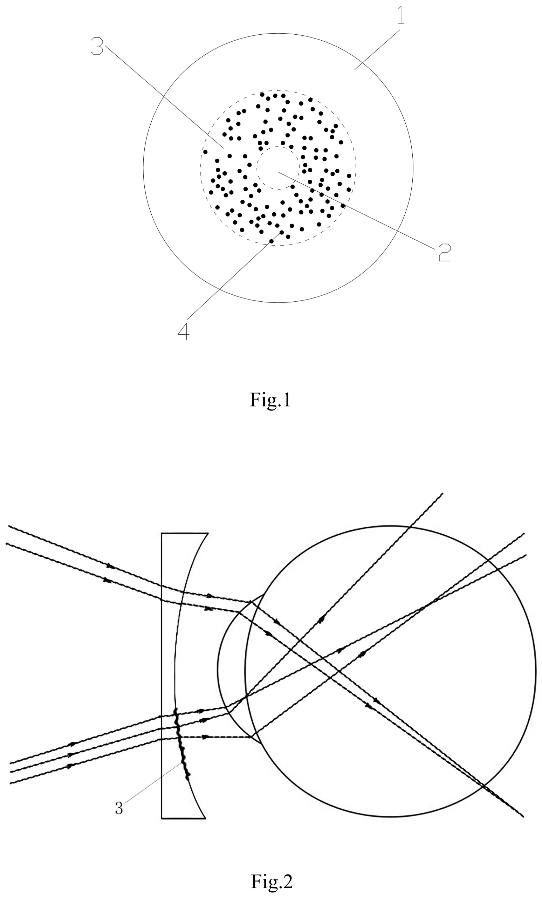

Based on the above inventive concept, the embodiment of the present invention provides a myopia control lens. Referring to Fig. 1, the myopia control lens provided in this embodiment includes: a lens substrate 1, on which a central optical zone 2 and a control zone 3 surrounding the periphery of the central optical zone 2 are arranged;
a plurality of optical microstructural units 4 are arranged on the control zone 3, and the optical microstructural units 4 are arranged in an aperiodic manner in the control zone 3; the optical microstructural units 4 are used to change the incident angle of light.

In the above myopia control lens, the central optical zone 2 has the same function as the central optical zone of the existing defocus lens, and is mainly used to provide vision correction associated with the foveal area of the spectacle wearer. The total diameter of the lens substrate 1 can be 70-75mm, the diameter range of the central optical zone 2 can be 5mm-15mm, and the position, specific size, refractive index, etc., of the central optical zone 2 on the lens substrate 1 can be selected and set according to the individual conditions of the spectacle wearer.

The above-mentioned control zone 3 is arranged on the periphery of the central optical zone 2. A plurality of optical microstructural units 4 capable of changing the incident angle of light are arranged in this zone, and the above-mentioned optical microstructural units 4 are designed in an aperiodic arrangement. Therefore, the position and angle of light entering the eyeball after being refracted by the control zone 3 are also irregular. Referring to Fig. 2, the upper part of Fig. 2 shows the state of light entering the eyeball after passing through the lens without the control zone, where the light all falls behind the retina; the lower part of Fig. 2 shows the state of light entering the eyeball after passing through the lens with the control zone 3 shown in this embodiment, where the light is in a disorganized state. That is, the function of the control zone 3 is to form strong optical interference in the peripheral visual field, so that when the eyeball rotates in different directions, the point spread function formed by an ideal point light source on the human retina is anisotropic and different, making it impossible for the retina to distinguish the correct growth direction of the eyeball in a short time, thereby minimizing the neural adaptation phenomenon of the retina and reducing the decline in optical control efficiency during myopia control. The optical microstructural units can be one or a combination of microlenses, microconcave lenses, microcylinders, microprisms, or free-form surface lenses. It should be noted that the optical microstructural units 4 in Fig. 1 are represented by circular black dots, which are only used to show the distribution position of the optical microstructural units 4 in the control zone 3, and do not represent the specific structural form of the optical microstructural units 4. As a preferred solution of this embodiment, among the plurality of optical microstructural units, some or all of the optical microstructural units have differences in shape and/or size. In addition, the size of the above-mentioned optical microstructural units is preferably 50 µ m ~ 2500 µm.

In the present application, the area other than the optical microstructural units in the control zone is called the substrate transparent zone, which is the area where the lens substrate is not subjected to any treatment, and the substrate transparent units form the substrate transparent zone. The inventors of the present application further found that the optical interfaces between adjacent optical microstructural units and between adjacent optical microstructures and substrate transparent units contribute the most to changing the incident angle of light. Therefore, to enhance the optical interference effect, as a preferred solution of the present application, the optical microstructural units and the substrate transparent units are arranged in the control zone in a tessellated form. The tessellated manner can improve the filling rate, increase the length of the above-mentioned optical interfaces, and maximize the strong interference of light propagation.

Preferably, the control zone is formed by tessellation of one, two, or more types of graphic units; among all the graphic units forming the control zone, some graphic units form the optical microstructural units, and the remaining graphic units form the substrate transparent units. Those skilled in the art can understand that the distribution of the part of the graphic units used to form the optical microstructural units on the control zone should be aperiodic. The above-mentioned tessellation form can be aperiodic tessellation or periodic tessellation.

The preferred embodiments of the present invention are described below in two cases:
Case 1: The control zone is formed by aperiodic tessellation of one, two, or more types of graphic units. In this structure, which graphic units are selected to form the optical microstructural units can be randomly selected, manually selected, or selected by technical computer software, with great flexibility in selection, and there is no need to deliberately avoid the situation that the optical microstructural units form a regular arrangement.

In another embodiment, the aperiodic tessellation refers to splicing the above-mentioned graphic units to fully cover the entire control zone plane without gaps or overlaps; and the arrangement of the graphic units does not follow any periodic pattern; the aperiodic tessellation refers to splicing the above-mentioned graphic units to fully cover the entire control zone plane without gaps or overlaps; and the arrangement of the graphic units does not follow any periodic pattern.

Specifically, the control zone can be formed by aperiodic tessellation of one type of graphic unit. At the end of March 2023, David Smith, Joseph Samuel Myers, Craig S. Kaplan, and Chaim Goodman-Strauss announced the discovery of a graphic unit capable of realizing single-graphic tessellation, which is a 13-sided polygon resembling a hat shape. In this case, two mirror-symmetric graphics are defaulted to be the same shape. In the early morning of May 30, 2023, four people including David Smith and Joseph Samuel Myers published a 23-page new paper "Achiral aperiodic monotile", in which they announced a graphic unit that can achieve aperiodic tessellation through rotation and translation without relying on mirror symmetry, which they named "Spectre" (tentatively translated as "Ghost", and this kind of tessellation is tentatively called "Ghost tessellation"). Subsequently, Kaplan et al. found that the previously discovered "Spectre" is not the only single graphic unit that can realize single-graphic aperiodic tessellation, but an infinite set of graphic units. On the basis of the aforementioned hat-shaped single graphic unit, similar graphics generated by adjusting the edges of the hat according to certain rules also meet the conditions of aperiodic tessellation. The aforementioned hat-shaped 13-sided polygon, "Spectre", and the derived series of graphics, as well as the variants based on the aforementioned graphic units, can all be used as the above-mentioned graphic units forming the control zone of the present application.

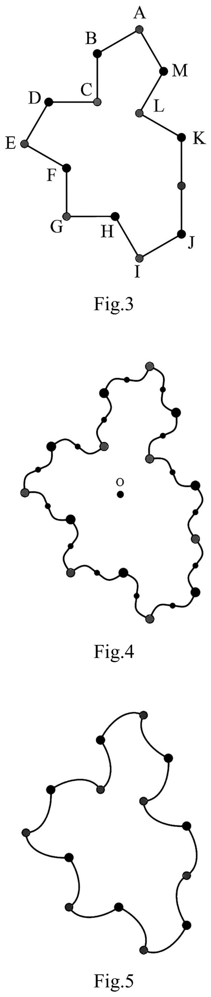

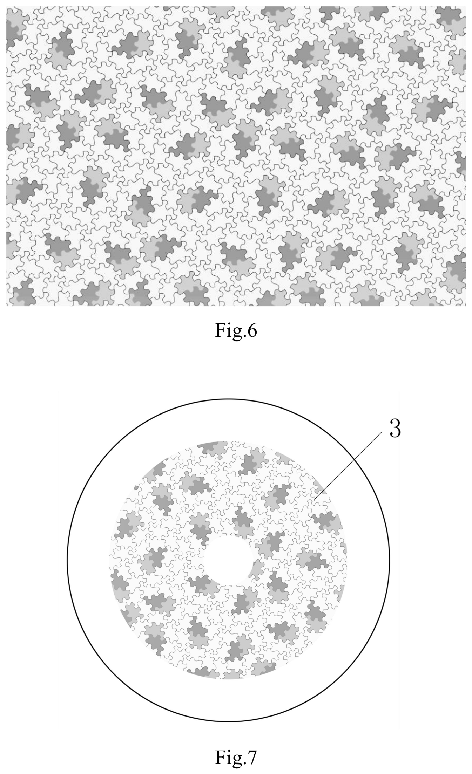

As a preferred solution of this embodiment, the structure of the graphic unit can be as shown in Fig. 3. The graphic unit is a 13-sided polygon, which is a closed pattern formed by sequentially connecting the first short side AB, the second short side BC, the third short side CD, the fourth short side DE, the fifth short side EF, the sixth short side FG, the seventh short side GH, the eighth short side HI, the ninth short side IJ, the first long side JK, the tenth short side KL, the eleventh short side LM, and the twelfth short side MA. The internal angle between the first short side AB and the second short side BC is 120° , the internal angle between the second short side BC and the third short side CD is 270° , the internal angle between the third short side CD and the fourth short side DE is 120° , the internal angle between the fourth short side DE and the fifth short side EF is 90° , the internal angle between the fifth short side EF and the sixth short side FG is 240° , the internal angle between the sixth short side FG and the seventh short side GH is 90° , the internal angle between the seventh short side GH and the eighth short side HI is 240° , the internal angle between the eighth short side HI and the ninth short side IJ is 90° , the internal angle between the ninth short side IJ and the first long side JK is 120° , the internal angle between the first long side JK and the tenth short side KL is 120° , the internal angle between the tenth short side KL and the eleventh short side LM is 270° , the internal angle between the eleventh short side LM and the twelfth short side MA is 120° , and the internal angle between the twelfth short side MA and the first short side AB is 90° . Based on the graphic unit shown in Fig. 3, the graphic units shown in Fig.s 4 and 5 obtained by variation can also realize aperiodic tessellation. In the myopia control lens shown in Fig. 7, its control zone 3 is formed by tessellation of the graphic units shown in Fig. 4, and a partial enlarged view of the tessellated state of the control zone is shown in Fig. 6. The graphic monomers of different colors in Fig. 6 are only used to show the random distribution characteristics of the aperiodic tessellation monomers, and are not used to distinguish between the optical microstructural units and the substrate transparent units. In this control zone, some graphic units are selected as optical microstructural units through random selection, manual selection, or technical computer software selection, and the remaining graphic units are used as substrate transparent units.

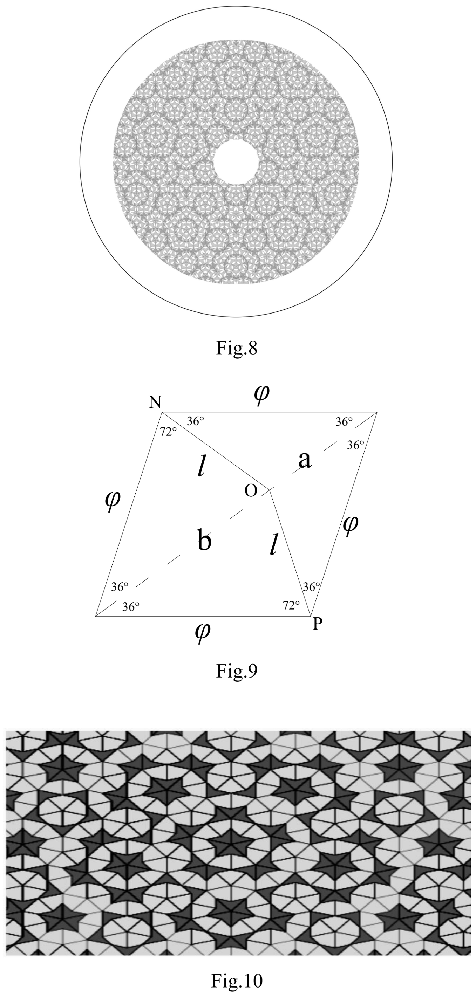

The control zone can also be formed by aperiodic tessellation of two types of graphic units. Specifically, the control zone can form Penrose tessellation by two types of graphic units. Fig. 8 shows the structure of a myopia control lens according to a preferred embodiment. Specifically, the control zone 3 of the myopia control lens is formed by aperiodic tessellation of two types of graphic units. Referring to Fig. 9, the two types of graphic units are graphic unit a and b respectively. The graphic units a and b are formed by dividing a rhombus with internal angles of 72° and 108° in the manner shown in Fig. 9 (i.e., dividing the rhombus according to the dividing line L, where the dividing line NOP is composed of the dividing line NO and the dividing line OP; starting from a 108° internal angle end, extending towards a 72° internal angle end until intersecting with the connecting line of the two 72° internal angles to form the dividing line NO, and the dividing line OP is symmetrically arranged with the dividing line NO along the internal angle connecting line) into a graphic unit a (similar to a dart shape) and a graphic unit b (similar to a kite shape). The specific structure of the graphic unit a is as follows: a quadrilateral formed by concave inward from the center of the base of an isosceles triangle with a waist length of ϕ and a vertex angle of 72° towards the vertex angle. The side lengths of the quadrilateral are ϕ , 1, 1, ϕ respectively, and the internal angles are 72° , 36° , 216° , 36° respectively. The specific structure of the graphic unit b is as follows: a quadrilateral formed by convex outward from the center of the base of an isosceles triangle with a waist length of ϕ and a vertex angle of 72° away from the vertex angle. The side lengths of the quadrilateral are ϕ , 1, 1, ϕ respectively, and the internal angles are 72° , 72° , 144° , 72° respectively. The Penrose tessellation structure formed by the graphic units a and b is shown in Fig. 10. In this structure, the graphic unit b (i.e., the light gray graphic unit in Fig. 10) is preferably designed as the optical microstructural unit, and the graphic unit a (i.e., the dark gray graphic unit in Fig. 10) is designed as the substrate transparent unit. Of course, some graphic units a and/or graphic units b can also be selected as optical microstructural units through random selection, manual selection, or technical computer software selection, and the remaining graphic units are used as substrate transparent units.

In addition, the control zone can also be formed by aperiodic tessellation of multiple types of graphic units, such as 6 types, 92 types, or 20426 types of graphic units.

Case 2: The control zone is formed by periodic tessellation of one, two, or more types of graphic units. In this structure, which graphic units are selected to form the optical microstructural units can be randomly selected, manually selected, or selected by technical computer software, and it is necessary to deliberately avoid the situation that the optical microstructural units form a regular arrangement.

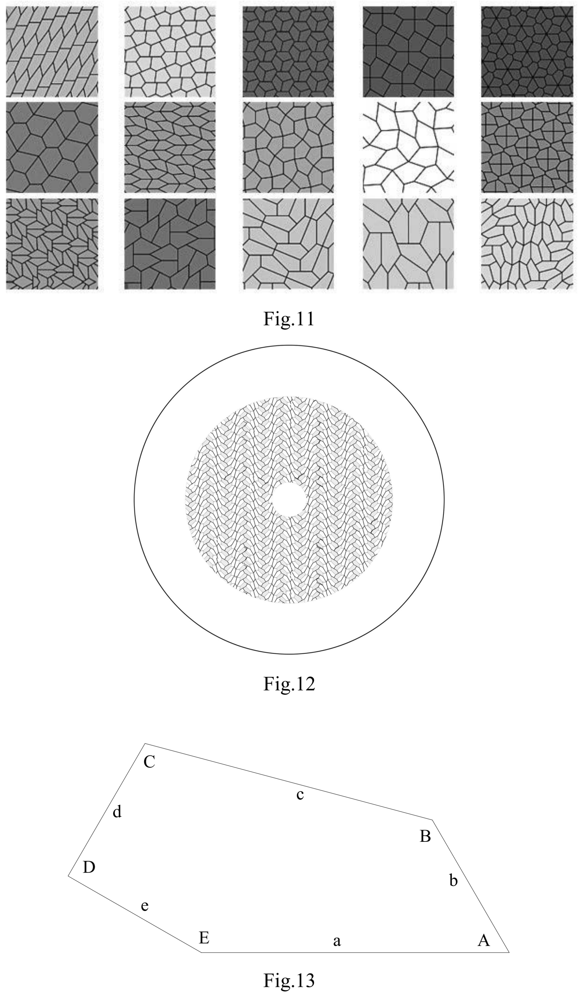

Specifically, the control zone is formed by periodic tessellation of one type of graphic unit, and the shape of the graphic unit is a triangle, convex quadrilateral, perfect pentagon, or regular hexagon, more preferably a perfect pentagon. So far, humans have discovered a total of 15 types of perfect pentagons, and the tessellation diagrams of these 15 types of perfect pentagons are shown in Fig. 11. Compared with other shapes, the shape of the perfect pentagon is more irregular, which is conducive to improving the light interference intensity.

It can be seen from the above content that the myopia control lens provided by the embodiment of the present invention has the following advantages:
The myopia control lens provided by this embodiment has a control zone around the periphery of the central optical zone. The control zone is provided with a plurality of optical microstructural units capable of changing the incident angle of light, and the above-mentioned optical microstructural units are designed in an aperiodic arrangement. As a result, the position and angle of light entering the eyeball after being refracted by the control zone are also irregular. The control zone of this design can form strong optical interference in the peripheral visual field, so that when the eyeball rotates in different directions, the point spread function formed by an ideal point light source on the human retina is anisotropic and different, making it impossible for the retina to distinguish the correct growth direction of the eyeball in a short time, thereby minimizing the neural adaptation phenomenon of the retina and reducing the decline in optical control efficiency during myopia control. The myopia control lens emphasizes the aperiodicity of the positional distribution of the optical microstructural units, aiming to realize the irregularity of light in the peripheral visual field, thereby reducing the neural adaptation phenomenon of the retina and delaying the decline in optical control efficiency. Further, by arranging the optical microstructural units and the substrate transparent units in the control zone in a tessellated form, the filling rate can be improved, and the length of the optical interface between different optical structures can be increased to maximize the strong interference of light propagation.

On the other hand, the embodiment of the present invention also provides eyeglasses for myopia control, which are provided with the myopia control lens according to any one of the above embodiments. The specific implementation and beneficial effects are the same as those of the myopia control lens, and will not be repeated here.

The technical solutions of the present invention are further described below in conjunction with specific embodiments:

### Example 1 - Control Zone Constructed by Penrose Tessellation

The structure of the myopia control lens provided in this example is shown in Fig. 8. The control zone is formed by Penrose tessellation of graphic units a and b divided from the rhombus shown in Fig. 9. The side length of the rhombus ϕ =400 µm, and the cross-section is a circular arc. The graphic unit a is used as the substrate transparent unit, and the graphic unit b is used as the optical microstructural unit. The tessellated state is shown in Fig. 10. Five surrounding graphic units b can form a microstructure similar to a convex lens, and the refractive power of the convex lens is set to +5.00D. The refractive index of the lens is 1.67, and the vertex height of the rhombus used to form the graphic unit b is 0.60 µm. Considering the coating processing accuracy and the submersion of the microstructure during the coating process, the sag height of the curved cross-section can be 1.0-1.3 µ m. It should be noted that in the light gray filled area not forming a nearly circular shape, the microstructure still has the effect of disrupting light propagation, which is a prism effect rather than a convex lens at this time.

### Example 2 - Control Zone Constructed by Ghost Tessellation

The structure of the myopia control lens provided in this example is shown in Fig. 7. The control zone is formed by Ghost tessellation of the graphic units shown in Fig. 4, and the tessellated state is shown in Fig. 6. The refractive index of the lens is 1.67. The length of the long side of the graphic unit is 400 µ m. The combination of dark gray and light gray graphic units in Fig. 7 is used as the substrate transparent unit, and the remaining graphic units are used as the optical microstructural units. For the optical microstructural units, the sag height at the structural center point O is 1.5 µm, and the center vertex is connected with all edge points of the microstructure by circular arcs to form a free-form surface microstructure. Considering the coating processing accuracy and the submersion of the microstructure during the coating process, the sag height of the curved cross-section can be 2.5 µ m.

### Example 3 - Control Zone Constructed by Perfect Pentagon

The structure of the myopia control lens provided in this example is shown in Fig. 12. The control zone is formed by tessellation of the perfect pentagons shown in Fig. 13. The dimensions of the perfect pentagon are as follows: internal angles A=60° , B=135° , C=105° , D=90° , E=150° ; side lengths b=d=e=a/2, c=a/ √ 2( √ 3-1). In this example, a=400 µ m, b=d=e=200 µm, c=386.4 µ m. Some perfect pentagons are randomly selected as optical structural units, which are formed by cutting convex lenses. According to the cosine theorem, AD=582 µm. If a lens with a refractive index of 1.74 and a refractive power of +50.00D is made with AD as the chord length, the sag height is 2.9 µ m. Considering the coating submersion, the sag height can be processed to 6 µ m.

### Example 4 - Control Zone Constructed by Perfect Pentagon

The structure of the myopia control lens provided in this example is the same as that in Example 3, and the side lengths and internal angles of the perfect pentagon are the same. Some perfect pentagons are also randomly selected as optical structural units, which are formed by cutting convex lenses. The difference from Example 3 is that the refractive indices of the convex lenses are not completely the same; specifically, convex lenses with a refractive index of 1.74 and a refractive power distribution range of +3.00D ~ +15.0D are made, and the sag height range is 0.17 µ m ~ 0.86 µ m. Considering the coating submersion, the sag height can be processed to the range of 0.3 µ m ~ 1.5 µ m.

The various embodiments of the present invention have been described above. The above description is exemplary, not exhaustive, and is not limited to the disclosed embodiments. For those of ordinary skill in the art, many modifications and changes are obvious without departing from the scope and spirit of the described embodiments. The selection of terms herein is intended to best explain the principles, practical applications, or improvements of the technologies in the market of the various embodiments, or to enable other ordinary skilled in the art to understand the various embodiments disclosed herein.

## Claims

1. A myopia control lens, wherein, comprising: a lens substrate, on which a central optical zone and a control zone surrounding the periphery of the central optical zone are arranged; a plurality of optical microstructural units are arranged on the control zone, and the optical microstructural units are arranged in an aperiodic manner in the control zone; the optical microstructural units are used to change the incident angle of light.

2. The myopia control lens according to claim 1, wherein, the control zone is formed by tessellation of one, two, or more types of graphic units; among all the graphic units forming the control zone, some graphic units form the optical microstructural units; the remaining graphic units form substrate transparent units.

3. The myopia control lens according to claim 2, wherein, the control zone is formed by aperiodic tessellation of one, two, or more types of graphic units.

4. The myopia control lens according to claim 3, wherein, the control zone is formed by aperiodic tessellation of one type of graphic unit.

5. The myopia control lens according to claim 3, wherein, the control zone is formed by aperiodic tessellation of two types of graphic units.

6. The myopia control lens according to claim 2, wherein, the control zone is formed by periodic tessellation of one, two, or more types of graphic units.

7. The myopia control lens according to claim 6, wherein, the control zone is formed by periodic tessellation of one type of graphic unit, and the shape of the graphic unit is a triangle, convex quadrilateral, perfect pentagon, or regular hexagon.

8. The myopia control lens according to claim 1, wherein, among the plurality of optical microstructural units, some or all of the optical microstructural units have differences in shape and/or size.

9. The myopia control lens according to claim 1, wherein, the optical microstructural units are one or a combination of microlenses, microconcave lenses, microcylinders, microprisms, or free-form surface lenses.

10. The myopia control lens according to claim 1, wherein, the control zone is formed by aperiodic tessellation of one, two, or more types of graphic units; the aperiodic tessellation refers to splicing the above-mentioned graphic units to fully cover the entire control zone plane without gaps or overlaps; and the arrangement of the graphic units does not follow any periodic pattern; among all the graphic units forming the control zone, some graphic units form the optical microstructural units; the remaining graphic units form the substrate transparent units;
the optical microstructural units are used to change the incident angle of light, so that the position and angle of light entering the eyeball after being refracted by the control zone are irregular.

11. The myopia control lens according to claim 1, wherein, the control zone is formed by aperiodic tessellation of one type of graphic unit; the graphic unit is a Spectre graphic unit forming Spectre tessellation, a series of graphics derived from the Spectre graphic unit, or a variant based on the Spectre graphic unit.

12. The myopia control lens according to claim 1, wherein, the control zone is formed by aperiodic tessellation of one type of graphic unit; the graphic unit is a hat-shaped 13-sided polygon or a variant based on the 13-sided polygon;
the 13-sided polygon is a closed pattern formed by sequentially connecting the first short side AB, the second short side BC, the third short side CD, the fourth short side DE, the fifth short side EF, the sixth short side FG, the seventh short side GH, the eighth short side HI, the ninth short side IJ, the first long side JK, the tenth short side KL, the eleventh short side LM, and the twelfth short side MA. The internal angle between the first short side AB and the second short side BC is 120° , the internal angle between the second short side BC and the third short side CD is 270° , the internal angle between the third short side CD and the fourth short side DE is 120° , the internal angle between the fourth short side DE and the fifth short side EF is 90° , the internal angle between the fifth short side EF and the sixth short side FG is 240° , the internal angle between the sixth short side FG and the seventh short side GH is 90° , the internal angle between the seventh short side GH and the eighth short side HI is 240° , the internal angle between the eighth short side HI and the ninth short side IJ is 90° , the internal angle between the ninth short side IJ and the first long side JK is 120° , the internal angle between the first long side JK and the tenth short side KL is 120° , the internal angle between the tenth short side KL and the eleventh short side LM is 270° , the internal angle between the eleventh short side LM and the twelfth short side MA is 120° , and the internal angle between the twelfth short side MA and the first short side AB is 90° .

13. The myopia control lens according to claim 1, wherein, the control zone forms Penrose tessellation by two types of graphic units.

14. The myopia control lens according to claim 13, wherein, the two types of graphic units are graphic unit a and b respectively, and the graphic units a and b are formed by dividing a rhombus with internal angles of 72° and 108° in the following manner:
dividing the rhombus according to a dividing line, which is composed of a dividing line NO and a dividing line OP; starting from a 108° internal angle end, extending towards a 72° internal angle end until intersecting with the connecting line of the two 72° internal angles to form the dividing line NO, and the dividing line OP is symmetrically arranged with the dividing line NO along the internal angle connecting line;
the specific structure of the graphic unit a is as follows: a quadrilateral formed by concave inward from the center of the base of an isosceles triangle with a waist length of ϕ and a vertex angle of 72° towards the vertex angle, the side lengths of the quadrilateral are ϕ , 1, 1, ϕ respectively, and the internal angles are 72, 36° , 216° , 36° respectively;
the specific structure of the graphic unit b is as follows: a quadrilateral formed by convex outward from the center of the base of an isosceles triangle with a waist length of ϕ and a vertex angle of 72° away from the vertex angle, the side lengths of the quadrilateral are ϕ , 1, 1, ϕ respectively, and the internal angles are 72° , 72° , 144° , 72° respectively.

15. Eyeglasses for myopia control, wherein being provided with the myopia control lens according to any one of claims 1 to 14.
